# EUROPEAN PATENT APPLICATION

(11) **EP 4 597 337 A1**
(43) Date of publication of application: **06.08.2025**
(21) Application number: 24209602.2
(22) Date of filing: 29.10.2024
(51) Int. Cl.: G06F 16/95, G06Q 30/0241

(54) **INTERACTION METHOD, APPARATUS, READABLE MEDIUM, AND ELECTRONIC DEVICE**

(30) Priority: 31.01.2024 CN 202410140098
(71) Applicant: Beijing Youzhuju Network Technology Co., Ltd., Beijing 101299 (CN)
(72) Inventor: ZHANG, Jiaqian, Beijing, 100028 (CN); ZHANG, Jinming, Beijing, 100028 (CN); XU, Han, Beijing, 100028 (CN); MIAO, Linjuan, Beijing, 100028 (CN); YANG, Hao, Beijing, 100028 (CN); SHI, Shengyan, Beijing, 100028 (CN); GUO, Jinhui, Beijing, 100028 (CN)
(74) Representative: Marks & Clerk LLP

(57) **Abstract**

The present disclosure relates to an interaction method and apparatus, a readable medium, and an electronic device, which can improve content richness of a search result page and improve an interaction experience of a user. The interaction method includes: displaying a search result page in response to a search operation triggered by a search keyword, the search result page displaying search result content obtained by searching based on the search keyword and multimedia content triggered and displayed by the search keyword; displaying an interactive control after the multimedia content is displayed for a first preset time, the interactive control being used for triggering and displaying a target landing page corresponding to the multimedia content; and displaying the target landing page in response to a trigger operation for the interactive control.

## Description

### CROSS-CITATION TO RELATED APPLICATIONS

This application claims the priority to and benefits of the Chinese Patent Application, No. 202410140098.4, which was filed on January 31, 2024. The aforementioned patent application is hereby incorporated by citation in its entirety.

### TECHNICAL FIELD

The present disclosure relates to the field of computer technologies, and in particular, to an interaction method, apparatus, a readable medium, and an electronic device.

### BACKGROUND

When a user uses a search application or an application with a search function, the user may input a keyword to search for needed information, and then a search result page is triggered and displayed. The search result page displays a search result obtained by searching for the keyword. Taking an application with an online shopping function as an example, the user may input the product name to search, and a corresponding product search result is displayed.

### SUMMARY

The Summary is to introduce the concepts in a simplified form, and the concepts will be described in detail below in the Detailed Description. The Summary is not intended to identify the key features or necessary features of the claimed technical solutions, nor is it intended to be used to limit the scope of the claimed technical solutions.

According to a first aspect, the present disclosure provides an interaction method. The interaction method includes:
displaying a search result page in response to a search operation triggered by a search keyword, the search result page displaying search result content obtained by searching based on the search keyword and multimedia content triggered and displayed by the search keyword;
displaying an interactive control after the multimedia content is displayed for a first preset time, the interactive control being used for triggering and displaying a target landing page corresponding to the multimedia content; and
displaying the target landing page in response to a trigger operation for the interactive control.

According to a second aspect, the present disclosure provides an interaction apparatus. The interaction apparatus includes:
a first response module, configured to display a search result page in response to a search operation triggered by a search keyword, the search result page displaying search result content obtained by searching based on the search keyword and multimedia content triggered and displayed by the search keyword;
a display module, configured to display an interactive control after the multimedia content is displayed for a first preset time, the interactive control being used for triggering and displaying a target landing page corresponding to the multimedia content; and
a second response module, configured to display the target landing page in response to a trigger operation for the interactive control.

According to a third aspect, the present disclosure provides a computer-readable storage medium having a computer program stored thereon that, when executed by a processing apparatus, the steps of the method according to any one of the first aspect are implemented.

According to a fourth aspect, the present disclosure provides an electronic device, including:
a storage apparatus having a computer program stored thereon; and
a processing apparatus, configured to execute the computer program in the storage apparatus to implement the steps of the method according to any one of the first aspect.

According to the above technical solutions, the search result page can display not only the search result content obtained by searching based on the search keyword, but also the multimedia content triggered and displayed by the search keyword, and the interactive control can be displayed after the multimedia content is displayed for the first preset time. In this way, different types of content can be displayed for the user on the search result page, to improve content richness of the search result page. In addition, the target landing page corresponding to the search keyword can be displayed for the user through the interactive control on the search result page, which simplifies the way in which the user reaches the target landing page, thereby improving an interaction experience of the user.

Other features and advantages of the present disclosure will be described in detail in the following detailed description.

### BRIEF DESCRIPTION OF DRAWINGS

The above and other features, advantages, and aspects of the embodiments of the present disclosure will become more apparent with reference to the following specific embodiments in conjunction with the accompanying drawings. Throughout the drawings, the same or similar reference numbers denote the same or similar elements. It should be understood that the accompanying drawings are schematic and that parts and elements are not necessarily drawn to scale. In the drawings:
Fig. 1 is a schematic flowchart of an interaction method according to an exemplary embodiment;
Fig. 2 is a schematic view of inputting a search keyword according to an exemplary embodiment;
Fig. 3 is a schematic view of a search result page according to an exemplary embodiment;
Fig. 4 is a schematic view of a display of a third interactive control according to an exemplary embodiment;
Fig. 5 is a schematic view of a process of the search result page jumping to a target landing page according to an exemplary embodiment;
Fig. 6 is a schematic view of an animation effect of a fourth interactive control according to an exemplary embodiment;
Fig. 7 is a schematic flowchart of an interaction method according to an exemplary embodiment;
Fig. 8 is a block diagram of an interaction apparatus according to an exemplary embodiment; and
Fig. 9 is a block diagram of an electronic device according to an exemplary embodiment.

### DETAILED DESCRIPTION

Embodiments of the present disclosure will be described in more detail below with reference to the accompanying drawings. Although some embodiments of the present disclosure are shown in the drawings, it should be understood that the present disclosure may be implemented in various forms and should not be construed as being limited to the embodiments set forth herein. Rather, these embodiments are provided for a more thorough and complete understanding of the present disclosure. It should be understood that the drawings and the embodiments of the present disclosure are only for exemplary purposes, and are not intended to limit the scope of protection of the present disclosure.

It should be understood that the various steps described in the method embodiments of the present disclosure may be performed in different orders, and/or performed in parallel. Furthermore, additional steps may be included and/or the execution of the illustrated steps may be omitted in the method embodiments. The scope of the present disclosure is not limited in this respect.

The term "include/comprise" used herein and the variations thereof are an open-ended inclusion, namely, "include/comprise but not limited to". The term "based on" means "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first," "second," etc. mentioned in the present disclosure are only used to distinguish different apparatuses, modules, or units, and are not intended to limit orders or interdependence relationships of functions performed by these apparatuses, modules, or units.

It should be noted that modifications of "one" and "more" mentioned in the present disclosure are schematic rather than restrictive, and those skilled in the art should understand that otherwise explicitly stated in the context, it should be understood as "one or more".

The names of messages or information exchanged between a plurality of apparatuses in the embodiments of the present disclosure are used for illustrative purposes only, and are not indicated to limit the scope of these messages or information.

It may be understood that before using the technical solutions disclosed in the embodiments of the present disclosure, the types, scope of use, and usage scenarios of personal information involved in the present disclosure and the like shall be informed to the user and the user's authorization shall be obtained in an appropriate manner in accordance with relevant laws and regulations.

For example, when receiving an active request from a user, a prompt message is sent to the user to explicitly prompt the user that an operation requested by the user will need to obtain and use the user's personal information. In this way, the user can choose whether to provide personal information to a software or hardware such as an electronic device, an application, a server, or a storage medium that performs the operation of the technical solution of the present disclosure according to the prompt message.

As an optional but non-limiting implementation, in response to receiving an active request from a user, the prompt message may be sent to the user in the form of a pop-up window, and the prompt message may be presented in the pop-up window in the form of text. In addition, the pop-up window may also carry a selection control for the user to select "agree" or "disagree" to provide personal information to the electronic device.

It may be understood that the above process of notifying and obtaining user authorization is only schematic, and does not limit the implementation of the present disclosure. Other manners that meet relevant laws and regulations may also be applied to the implementation of the present disclosure.

It may also be understood that the data (including but not limited to the data itself, data acquisition, or use) involved in the technical solutions of the present disclosure shall comply with the requirements of the corresponding laws, regulations, and related provisions.

In an application with an online shopping function, for example, a short-video application, the user inputs a product name to search, and a search result page displays a product search result, or the user inputs a product brand to search, and the search result page usually displays a brand store at the top first, followed by the product search results. The user needs to click to enter a store home page or a product detail page to completely view promotion information of the store or the product, for example, multimedia content such as a promotion activity introduction video, pictures and texts, etc.. If the user wants to enter a corresponding promotion activity landing page, the user needs to click on the multimedia content and perform other operations to reach the corresponding landing page, which makes the interaction process cumbersome and the user experience poor.

In view of this, the present disclosure provides an interaction method and apparatus, a readable medium, and an electronic device to solve the above technical problems.

The following further describes the embodiments of the present disclosure with reference to the accompanying drawings.

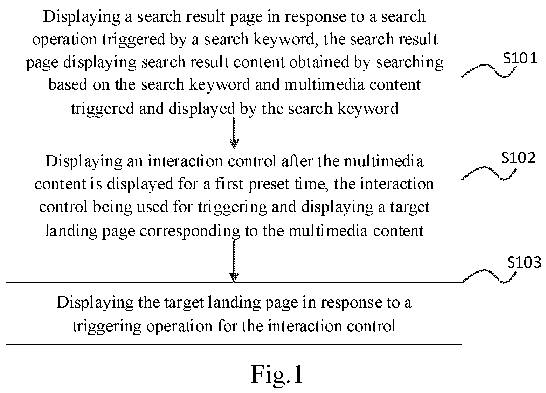

Fig. 1 is a flowchart of an interaction method according to an exemplary embodiment of the present disclosure. Referring to Fig. 1, the interaction method includes the following steps.

S101: displaying a search result page in response to a search operation triggered by a search keyword, the search result page displaying search result content obtained by searching based on the search keyword and multimedia content triggered and displayed by the search keyword.

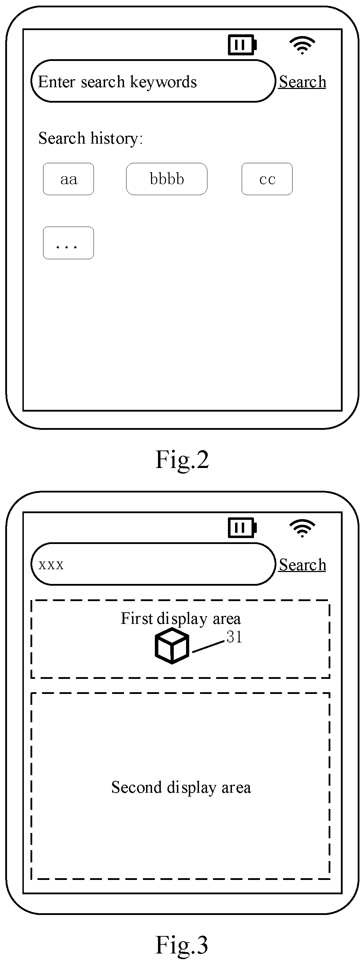

For example, referring to Fig. 2, the search keyword may be input in a search box to search, or a historical search keyword may be triggered, or a recommended keyword recommended by a platform may be triggered, to enter the search result page, etc.. This is not limited in the present disclosure.

S102: displaying an interactive control after the multimedia content is displayed for a first preset time, the interactive control being used for triggering and displaying a target landing page corresponding to the multimedia content.

S103: displaying the target landing page in response to a trigger operation for the interactive control.

By using the above method, the search result page can display not only the search result content obtained by searching based on the search keyword, but also the multimedia content triggered and displayed by the search keyword, and the interactive control can be displayed after the multimedia content is displayed for the first preset time. In this way, different types of content can be displayed for the user on the search result page, to improve content richness of the search result page. In addition, the target landing page corresponding to the search keyword can be displayed for the users through the interactive control on the search result page, which simplifies the way in which the user reaches the target landing page, thereby improving an interaction experience of the user.

In a possible embodiment, the multimedia content is at least one of video content, audio content, and picture content.

For example, in another search application or an application with a search function, the multimedia content is multimedia content triggered and displayed by the search keyword, and may be specifically set according to an actual scenario. This is not limited in the present disclosure. Taking an application with an online shopping function as an example, the search keyword may be product names, product brands, etc., and the multimedia content may be video content, audio content, picture content, etc. that is related to a store or a product, for example, the multimedia content related to a new store opening, a new product launch, a promotion activity, etc., which may be specifically set according to requirements. This is not limited in the present disclosure. In this way, the multimedia content triggered and displayed by the search keyword is displayed on the search result page, which can improve content richness of the search result page, thereby improving an interaction experience of the user.

In a possible embodiment, the displaying an interactive control after the multimedia content is displayed for a first preset time may include: displaying the interactive control in a form of a pop-up window on an upper layer of the search result page after the multimedia content is displayed for the first preset time.

For example, usually, the user browses content that the user is interested in, and closes or ignores content that the user is not interested in. The multimedia content is displayed for the first preset time, which indicates that the user is interested in the multimedia content. In this case, the interactive control may be displayed in the form of a pop-up window on the upper layer of the search result page to prompt the user to enter a corresponding landing page to learn more information related to the multimedia content.

For example, taking an application with an online shopping function as an example, the multimedia content is a video content introducing a product A. After the multimedia content is displayed for the first preset time, the interactive control is displayed in the form of a pop-up window on the upper layer of the search result page. After the user triggers the interactive control, it jumps to the product details page of the product A, so that the user can learn more information about the product A. The first preset time and a display style of the interactive control may be specifically set according to requirements. This is not limited in the present disclosure.

In a possible embodiment, the displaying a search result page may include: displaying the multimedia content in a first display area of the search result page, and displaying the search result content in a second display area of the search result page, wherein the first display area is different from the second display area. The displaying an interactive control after the multimedia content is displayed for a first preset time may include: displaying the interactive control in the first display area after the multimedia content is displayed for the first preset time.

For example, the multimedia content and the search result content may be displayed in separate areas. As shown in Fig. 3, the first display area and the second display area are an upper area and a lower area for display. The specific settings can be made according to the needs, and are not limited in the present disclosure. In addition, the interactive control 31 is displayed in the first display area after the multimedia content is displayed for the first preset time.

For example, taking an application with an online shopping function as an example, the user can input a product name "xxx", the first display area displays multimedia content related to the product "xxx", and the second display area displays a list of products related to the product name "xxx". Alternatively, the user can input a product brand "xxx", the first display area displays multimedia content related to the product brand "xxx", and the second display area displays a store of the product brand "xxx" and a related product list. This is not limited in the present disclosure.

It should be noted that in addition to being displayed in separate areas, the multimedia content and the search result content may also be displayed in the following manners: the search result content is displayed on the search result page, and then the multimedia content is displayed in the form of a pop-up window, and so on. The specific settings can be made according to the needs, and are not limited in the present disclosure. In addition, the display of the multimedia content may be closed. For example, a close control is provided for the user to operate, or the multimedia content is automatically closed when the user browses the search result content. For example, when the user slides the second display area, the first display area may be folded, and so on. The specific settings can be made according to the needs, and are not limited in the present disclosure.

In a possible embodiment, the displaying an interactive control may include: displaying an interactive control in at least one of the following manners: displaying a first interactive control in a preset fixed style; and displaying a second interactive control in a first style, wherein the first style is determined based on the search keyword; and displaying a third interactive control in a second style when a target object is displayed in the multimedia content, wherein the second style is determined based on the target object.

For example, the interactive control may be in a preset fixed style, for example, in a sphere style, a gift box style, or the like. Different fixed styles may also be set for different industries and different events, for example, a mooncake style for Mid-Autumn Festival, a zongzi style for Dragon Boat Festival, etc.. The specific settings can be made according to the needs, and are not limited in the present disclosure.

For example, the interactive control may be determined based on the search keyword. Continuing with the application with an online shopping function as an example, if the search keyword is "glasses", the interactive control may be in the style of glasses; if the search keyword is a brand "xxx", the interactive control may be a trademark of the brand "xxx" or in the style of a certain product of the brand "xxx", and so on. The specific settings can be made according to the needs, and are not limited in the present disclosure.

For example, the interactive control may be determined based on the target object in the multimedia content. Continuing with the application with an online shopping function as an example, if the multimedia content is an introduction video of a certain pair of glasses, the interactive control may be in the style of glasses; if the multimedia content is an introduction video of a certain pair of shoes, the interactive control may be in the style of shoes, and so on. The specific settings can be made according to the needs, and are not limited in the present disclosure.

It should be noted that the interactive control may be displayed in one or more of the above display styles. For example, after the multimedia content is displayed for the first preset time, any one of the display styles may be displayed, or the display style may change with the display time of the multimedia content. For example, a preset fixed style is displayed first, then the first style is displayed, and finally the second style is displayed. The specific settings can be made according to the needs, and are not limited in the present disclosure.

By displaying the interactive controls in different styles, different style requirements can be met, and content richness and interest of the search result page can be improved, thereby improving an interaction experience of the user.

In a possible embodiment, the displaying a third interactive control in a second style when a target object is displayed in the multimedia content may include: when the target object is displayed in the multimedia content, using the target object displayed in the multimedia content as the third interactive control in the second style, and moving the third interactive control from a display position of the target object in the multimedia content to an upper layer of the search result page for display.

The target object may be a product object. Certainly, the target object may also be a non-product object. For example, if the multimedia content is a tourism promotion video for a certain mountain xx, the interactive control may be in the style of the mountain body of the mountain xx. The specific settings can be made according to the needs, and are not limited in the present disclosure. In addition, a merchant may provide materials, for example, the merchant provides the multimedia content and a display style of the interactive control. This is not limited in the present disclosure.

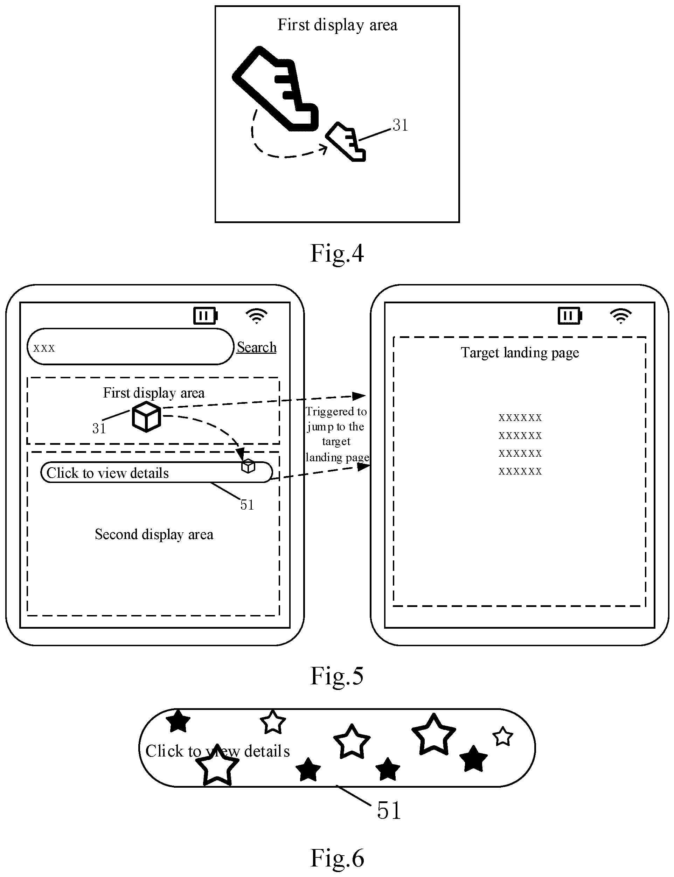

For example, referring to Fig. 4, continuing with the example that the multimedia content is an introduction video of a certain pair of shoes, when the pair of shoes is displayed in the multimedia content, the interactive control may be generated based on the style of the pair of shoes, and the interactive control is moved from the display position of the pair of shoes to the upper layer of the search result page for display. For example, the interactive control is displayed in the middle of the first display area in the form of a pop-up window, and so on. The specific settings can be made according to the needs, and are not limited in the present disclosure.

In this way, from the perspective of the user, it is equivalent to generating an interactive control that is the same as the target object displayed in the video content from the video content, so that the displaying of the interactive control is smoother and not abrupt, and the interest of the search result page can be improved, thereby improving an interaction experience of the user.

It should be noted that if the multimedia content is a picture content, the interactive control may be generated based on the target object in the picture content, and the interactive control may be moved from the display position of the target object to the upper layer of the search result page for display. If the multimedia content is an audio content, the interactive control may be displayed on the upper layer of the search result page when the target object appears in the audio content. The specific settings can be made according to the needs, and are not limited in the present disclosure.

In a possible embodiment, the moving the third interactive control from the display position of the target object in the multimedia content to the upper layer of the search result page for display may include: moving the third interactive control from the display position of the target object in the multimedia content to the upper layer of the search result page for display according to a first preset animation effect.

For example, the interactive control may be dynamically displayed during the movement of the interactive control. For example, the interactive control is first enlarged and then reduced, gradually reduced to a preset size, and so on. This is not limited in the present disclosure. Through linkage interaction between the interactive control and the fourth interactive control, content richness and interest of the search result page can be improved, and an interaction experience of the user can be improved.

In a possible embodiment, the search result page displays a fourth interactive control for triggering and displaying the target landing page, and the interaction method further includes: after the interactive control is displayed for a second preset time and the interactive control is not triggered, moving the interactive control from a current display position to a preset area of the fourth interactive control for display according to a preset path.

The second preset time may be determined according to requirements. This is not limited in the present disclosure. The interaction method further includes: displaying the target landing page in response to a trigger operation for the fourth interactive control.

For example, the search result page displays the fourth interactive control for triggering and displaying the target landing page. A display position and a display style of the fourth interactive control may be set according to requirements. This is not limited in the present disclosure. For example, continuing with the example that the search result page displays the multimedia content and the search result content in separate areas, referring to Fig. 5, the fourth interactive control 51 may be displayed in the second display area. In this way, even if the first display area is folded, the user may still trigger the fourth interactive control to jump to the target landing page at any time during the process of browsing the second display area.

For example, after the interactive control is displayed for the second preset time and the interactive control is not triggered, it indicates that the user may not notice the interactive control. Continuing to refer to Fig. 5, the interactive control may be moved from the current display position to the preset area of the fourth interactive control for display according to the preset path. In this way, the user can browse the multimedia content continuously without being disturbed, and it can also prompt the user to jump to the target landing page by triggering the fourth interactive control. Alternatively, it indicates that the user is not interested in the interactive control. Therefore, the display of the interactive control may also be cancelled, and so on. This is not limited in the present disclosure. Therefore, the interest of the search result page can be improved, and an interaction experience of the user can be improved.

It should be noted that the interactive control may be moved to the preset area of the fourth interactive control for display, and the user may choose to trigger the interactive control or the fourth interactive control. Alternatively, an icon representing the interactive control may be moved to the preset area of the fourth interactive control for display, and the icon of the interactive control does not have an interactive capability. This is not limited in the present disclosure. In addition, a display position of the interactive control or the icon representing the interactive control is not limited for example, may be the upper right corner, the upper left corner, and so on. The specific settings can be made according to the needs, and are not limited in the present disclosure.

In a possible embodiment, the interaction method further includes: displaying a second preset animation effect in the fourth interactive control while the interactive control is moved to the preset area of the fourth interactive control for display according to the preset path.

For example, referring to Fig. 6, a preset animation effect, e.g., a bubble, a five-pointed star, or the like may also be displayed in the fourth interactive control while the interactive control is moved. In addition, different animation effects may be set for different events. For example, a heart animation effect is displayed on Valentine's Day. The specific settings can be made according to the needs, and are not limited in the present disclosure.

In this way, by displaying the interactive controls with different animation effects, the interest of the search result page can be improved, and the user is prompted to pay attention to entering the corresponding landing page through the interactive control, which simplifies the way in which the user reaches the target landing page, thereby improving an interaction experience of the user.

In another possible implementation, while the interactive control is moved to the preset area of the fourth interactive control for display according to the preset path, the interactive control may be displayed according to a preset animation effect. For example, the interactive control is gradually reduced to a preset size as the interactive control moves. The specific settings can be made according to the needs, and are not limited in the present disclosure.

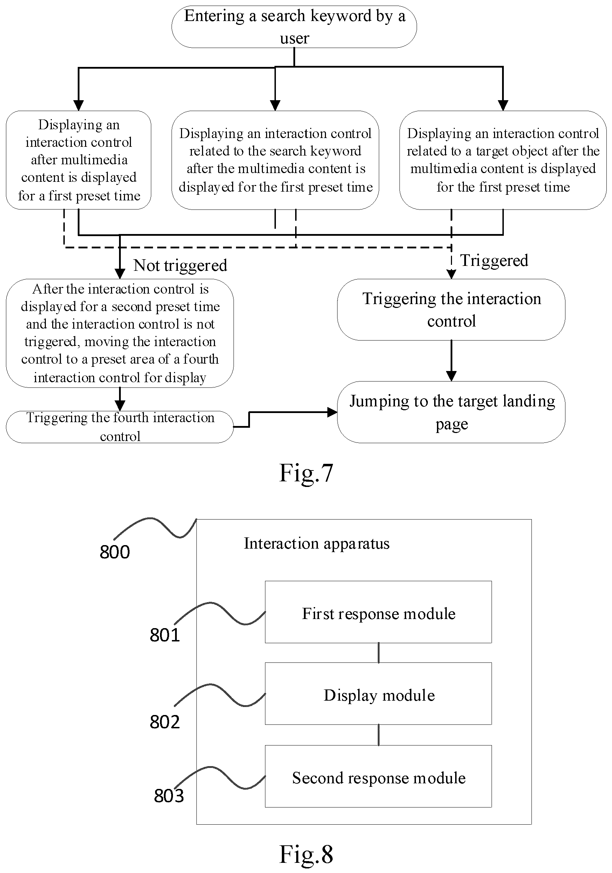

It should be noted that referring to Fig. 7, the interactive controls in different displaying styles may be displayed to the user, which can not only meet different requirements, but also improve the interest of the search result page. The user can enter the target landing page by triggering the interactive control, or if the interactive control is not triggered after being displayed for the preset time, the interactive control may be moved to the fourth interactive control. In this way, the display of the multimedia content is not affected, and the user can be prompted to enter the target landing page through the fourth interactive control, which simplifies the way in which the user reaches the target landing page, thereby improving an interaction experience of the user.

Based on the same inventive concept, the present disclosure further provides an interaction apparatus. Referring to Fig. 8, the interaction apparatus 800 includes:
a first response module 801, configured to display a search result page in response to a search operation triggered by a search keyword, the search result page displaying search result content obtained by searching based on the search keyword and multimedia content triggered and displayed by the search keyword;
a display module 802, configured to display an interactive control after the multimedia content is displayed for a first preset time, the interactive control being used for triggering and displaying a target landing page corresponding to the multimedia content; and
a second response module 803, configured to display the target landing page in response to a trigger operation for the interactive control.

By using the above apparatus, the search result page can display not only the search result content obtained by searching based on the search keyword, but also the multimedia content triggered and displayed by the search keyword, and the interactive control can be displayed after the multimedia content is displayed for the first preset time. In this way, different types of content can be displayed for the user on the search result page, to improve content richness of the search result page. In addition, the target landing page corresponding to the search keyword can be displayed for the user through the interactive control on the search result page, which simplifies the way in which the user reaches the target landing page, thereby improving an interaction experience of the user.

Optionally, the display module 802 is configured to:
displaying the interactive control in a form of a pop-up window on an upper layer of the search result page after the multimedia content is displayed for the first preset time.

Optionally, the display module 802 is configured to:
displaying an interactive control in at least one of the following manners:
displaying a first interactive control in a preset fixed style; and
displaying a second interactive control in a first style, wherein the first style is determined based on the search keyword; and
displaying a third interactive control in a second style when a target object is displayed in the multimedia content, wherein the second style is determined based on the target object.

Optionally, the display module 802 is configured to:
when the target object is displayed in the multimedia content, using the target object displayed in the multimedia content as the third interactive control in the second style, and moving the third interactive control from a display position of the target object in the multimedia content to an upper layer of the search result page for display.

Optionally, the display module 802 is configured to:
moving the third interactive control from the display position of the target object in the multimedia content to the upper layer of the search result page for display according to a first preset animation effect.

Optionally, the target object is a product object.

Optionally, the first response module 801 is configured to:
displaying the multimedia content in a first display area of the search result page, and displaying the search result content in a second display area of the search result page, wherein the first display area is different from the second display area; and
the display module 802 is configured to:
displaying the interactive control in the first display area after the multimedia content is displayed for the first preset time.

Optionally, the search result page displays a fourth interactive control for triggering and displaying the target landing page, and the interaction apparatus 800 further includes a first moving module, wherein the first moving module is configured to:
after the interactive control is displayed for a second preset time and the interactive control is not triggered, moving the interactive control from a current display position to a preset area of the fourth interactive control for display according to a preset path.

Optionally, the interaction apparatus 800 further includes a second moving module, wherein the second moving module is configured to:
displaying a second preset animation effect in the fourth interactive control while the interactive control is moved to the preset area of the fourth interactive control for display according to the preset path.

Optionally, the interaction apparatus 800 further includes a third response module, wherein the third response module is configured to:
displaying the target landing page in response to a trigger operation for the fourth interactive control.

Optionally, the multimedia content is at least one of video content, audio content, and picture content.

For the apparatus in the above embodiments, the specific manner in which each module performs an operation has been described in detail in the embodiments related to the method, and will not be described in detail here.

Based on the same inventive concept, an embodiment of the present disclosure further provides a computer-readable storage medium having a computer program stored thereon that, when executed by a processing apparatus, the steps of the above interaction method are implemented.

Based on the same inventive concept, an embodiment of the present disclosure further provides an electronic device, including:
a storage apparatus having a computer program stored thereon; and
a processing apparatus, configured to execute the computer program in the storage apparatus to implement the steps of the above interaction method.

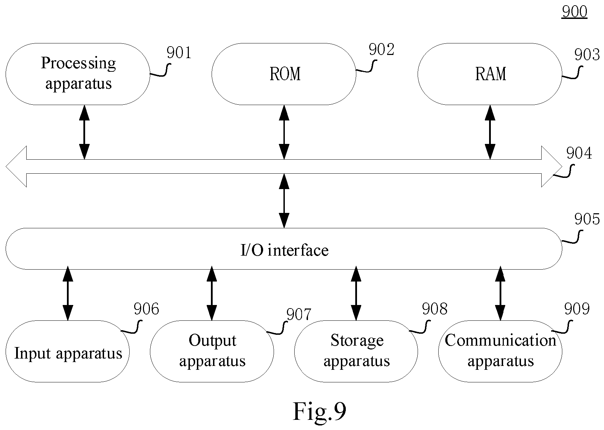

Referring to Fig. 9 below, Fig. 9 is a schematic view of a structure of an electronic device 900 suitable for implementing an embodiment of the present disclosure. The electronic device in the embodiment of the present disclosure may include, but is not limited to, mobile terminals such as a mobile phone, a notebook computer, a digital broadcast receiver, a personal digital assistant (PDA), a tablet computer (PAD), a portable multimedia player (PMP), and a vehicle-mounted terminal (for example, a vehicle navigation terminal) or the like, and fixed terminals such as a digital TV, a desktop computer or the like. The electronic device shown in Fig. 9 is merely an example, and shall not pose any limitation on the functions and the range of use of the embodiments of the present disclosure.

As shown in Fig. 9, the electronic device 900 may include a processing apparatus (for example, a central processing unit, a graphics processing unit, etc.) 901 that may perform various suitable actions and processing in accordance with a program stored in a read-only memory (ROM) 902 or a program loaded from a storage apparatus 908 into a random access memory (RAM) 903. The RAM 903 further stores various programs and data required for the operation of the electronic device 900. The processing apparatus 901, the ROM 902, and the RAM 903 are interconnected to each other through a bus 904. An input/output (I/O) interface 905 is also connected to the bus 904.

Usually, the following apparatus may be connected to the I/O interface 905: an input apparatus 906 including, for example, a touch screen, a touch pad, a keyboard, a mouse, a camera, a microphone, an accelerometer, and a gyroscope, or the like; an output apparatus 907 including, for example, a liquid crystal display (LCD), a loudspeaker, a vibrator, or the like; the storage apparatus 908 including, for example, a magnetic tape and a hard disk, or the like; and a communication apparatus 909. The communication apparatus 909 may allow the electronic device 900 to be in wireless or wired communication with other devices to exchange data. Although Fig. 9 shows the electronic device 900 having various apparatuses, it should be understood that not all of the illustrated apparatuses are necessarily implemented or included. More or fewer apparatuses may be implemented or included alternatively.

In particular, according to an embodiment of the present disclosure, the process described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 509 and installed, or may be installed from the storage apparatus 908, or may be installed from the ROM 902. When the computer program is executed by the processing apparatus 901, the above-mentioned functions defined in the methods of some embodiment of the present disclosure are performed.

It should be noted that the above-mentioned computer-readable medium in the present disclosure may be a computer-readable signal medium, or a computer-readable storage medium, or any combination thereof. For example, the computer-readable storage medium may be, but not limited to, an electric, magnetic, optical, electromagnetic, infrared, or semiconductor system, apparatus, or device, or any combination thereof. More specific examples of the computer-readable storage medium may include, but is not limited to: an electrical connection with one or more wires, a portable computer disk, a hard disk, a random access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination thereof. In the present disclosure, the computer-readable storage medium may be any tangible medium containing or storing a program that may be used by or in combination with an instruction execution system, apparatus, or device. In the present disclosure, the computer-readable signal medium may include a data signal propagated in a baseband or as a part of a carrier and carries the computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate, or transmit a program used by or in combination with an instruction execution system, apparatus, or device. The program code contained in the computer-readable medium may be transmitted by any suitable medium, including but not limited to: electric wires, fiber-optic cables, radio frequency (RF), and so on, or any appropriate combination thereof.

In some implementations, it may communicate using any network protocol currently known or to be developed in the future such as HyperText Transfer Protocol (HTTP), and may be communicated (via a communication network) and interconnected with digital data in any form or medium. Examples of the communication networks include a local area network ("LAN"), a wide area network ("WAN"), an internetwork (for example, the Internet), and an end-to-end network (for example, an ad hoc end-to-end network), as well as any network currently known or to be researched and developed in the future.

The above-mentioned computer-readable medium may be included in the above-mentioned electronic device; or may also exist alone without being assembled into the electronic device.

The above computer-readable medium carries one or more programs that, when executed by the electronic device, cause the electronic device to: display a search result page in response to a search operation triggered by a search keyword, the search result page displaying search result content obtained by searching based on the search keyword and multimedia content triggered and displayed by the search keyword; display an interactive control after the multimedia content is displayed for a first preset time, the interactive control being used for triggering and displaying a target landing page corresponding to the multimedia content; and display the target landing page in response to a trigger operation for the interactive control.

The computer program code for performing the operations of the present disclosure may be written in one or more programming languages or a combination thereof. The above-mentioned programming languages include but are not limited to an object-oriented programming language, such as Java, Smalltalk, and C++, and further include conventional procedural programming languages, such as "C" programming language or similar programming languages. The program code may be executed entirely on a computer of a user, partially executed on a computer of a user, executed as a stand-alone software package, partially executed on a computer of a user and partially executed on a remote computer, or executed entirely on the remote computer or server. In the scenario related to the remote computer, the remote computer may be connected to the computer of the user through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of the systems, the methods, and the computer program products according to various embodiments of the present disclosure. In this regard, each block in the flowchart or block diagrams may represent a module, a program segment, or a part of codes, including one or more executable instructions for implementing specified logical functions. It should also be noted that in some alternative implementations, the functions noted in the blocks may also occur out of the order noted in the accompanying drawings. For example, two blocks shown in succession may actually be executed substantially concurrently, or they may sometimes be executed in the reverse order, depending on the functionality involved. It should also be noted that each block in the block view and/or the flowchart, and a combination of the blocks in the block diagram and/or the flowchart may be implemented by a dedicated hardware-based system that performs the specified functions or operations, or may be implemented by a combination of dedicated hardware and computer instructions.

The modules involved in the embodiments of the present disclosure may be implemented in software or hardware. The name of a module does not constitute a limitation on the module itself under certain circumstances.

The functions described herein above may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system on chip (SOC), a complex programmable logic device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may include an electrical connection based on one or more wires, portable computer disk, hard disk, random access memory (RAM), read-only memory (ROM), erasable programmable read-only memory (EPROM or flash memory), optical fiber, portable compact disk read-only memory (CD-ROM), optical storage device, magnetic storage device, or any suitable combination thereof.

The foregoing are merely descriptions of the present disclosure and explanations of the technical principles involved. It will be appreciated by those skilled in the art that the scope of disclosure involved in the present disclosure is not limited to the technical solution formed by the specific combination of the technical features described above, and shall also cover other technical solutions formed by any combination of the technical features described above or equivalent features thereof without departing from the concept of the present disclosure. For example, the technical features described above may be mutually replaced with the technical features having similar functions disclosed herein (but not limited thereto) to form new technical solutions.

In addition, although operations have been described in a particular order, it should be understood as requiring that such operations are performed in the specific order as shown or in sequence. Under certain circumstances, multitasking and parallel processing may be advantageous. Similarly, although several specific implementation details are included in the foregoing discussions, these should not be construed as limitations to the scope of the present disclosure. Some features described in the context of separate embodiments can also be combined in a single embodiment. Rather, various features described in the context of a single embodiment may also be implemented separately or in any appropriate subcombination in a plurality of embodiments.

Although the present subject matter has been described in a language specific to structural features and/or logical method acts, it should be understood that the subject matter defined in the appended claims is not necessarily limited to the particular features or acts described above. Rather, the particular features and acts described above are merely exemplary forms for implementing the claims. For the apparatus in the above embodiments, the particular manner in which each module performs an operation has been described in detail in the embodiments related to the method, and will not be described in detail here.

## Claims

1. An interaction method, comprising:
displaying a search result page in response to a search operation triggered by a search keyword, the search result page displaying search result content obtained by searching based on the search keyword and multimedia content triggered and displayed by the search keyword;
displaying an interactive control after the multimedia content is displayed for a first preset time, the interactive control being used for triggering and displaying a target landing page corresponding to the multimedia content; and
displaying the target landing page in response to a trigger operation for the interactive control.

2. The interaction method according to claim 1, wherein the displaying an interactive control after the multimedia content is displayed for a first preset time comprises:
displaying the interactive control in a form of a pop-up window on an upper layer of the search result page after the multimedia content is displayed for the first preset time.

3. The interaction method according to claim 1, wherein the displaying an interactive control comprises:
displaying the interactive control in at least one of the following ways:
displaying a first interactive control in a preset fixed style; and
displaying a second interactive control in a first style, wherein the first style is determined based on the search keyword; and
displaying a third interactive control in a second style when a target object is displayed in the multimedia content, wherein the second style is determined based on the target object.

4. The interaction method according to claim 3, wherein the displaying a third interactive control in a second style when a target object is displayed in the multimedia content comprises:
when the target object is displayed in the multimedia content, using the target object displayed in the multimedia content as the third interactive control in the second style, and moving the third interactive control from a display position of the target object in the multimedia content to an upper layer of the search result page for display.

5. The interaction method according to claim 4, wherein the moving the third interactive control from a display position of the target object in the multimedia content to an upper layer of the search result page for display comprises:
moving the third interactive control from the display position of the target object in the multimedia content to the upper layer of the search result page for display according to a first preset animation effect.

6. The interaction method according to any one of claims 3 to 5, wherein the target object is a product object.

7. The interaction method according to any one of claims 1 to 5, wherein the displaying a search result page comprises:
displaying the multimedia content in a first display area of the search result page, and displaying the search result content in a second display area of the search result page, wherein the first display area is different from the second display area; and
the displaying an interactive control after the multimedia content is displayed for a first preset time comprises:
displaying the interactive control in the first display area after the multimedia content is displayed for the first preset time.

8. The interaction method according to any one of claims 1 to 5, wherein the search result page displays a fourth interactive control for triggering and displaying the target landing page, and the interaction method further comprises:
after the interactive control is displayed for a second preset time and the interactive control is not triggered, moving the interactive control from a current display position to a preset area of the fourth interactive control for display according to a preset path.

9. The interaction method according to claim 8, wherein the interaction method further comprises:
displaying a second preset animation effect in the fourth interactive control while the interactive control is moved to the preset area of the fourth interactive control for display according to the preset path.

10. The interaction method according to claim 8, wherein the interaction method further comprises:
displaying the target landing page in response to a trigger operation for the fourth interactive control.

11. The interaction method according to any one of claims 1 to 10, wherein the multimedia content is at least one of video content, audio content, and picture content.

12. An interaction apparatus, comprising:
a first response module (801), configured to display a search result page in response to a search operation triggered by a search keyword, the search result page displaying search result content obtained by searching based on the search keyword and multimedia content triggered and displayed by the search keyword;
a display module (802), configured to display an interactive control after the multimedia content is displayed for a first preset time, the interactive control being used for triggering and displaying a target landing page corresponding to the multimedia content; and
a second response module (803), configured to display the target landing page in response to a trigger operation for the interactive control.

13. The interaction apparatus according to claim 12, wherein the displaying an interactive control after the multimedia content is displayed for a first preset time comprises:
displaying the interactive control in a form of a pop-up window on an upper layer of the search result page after the multimedia content is displayed for the first preset time.

14. A computer-readable storage medium having a computer program stored thereon that, when executed by a processing apparatus, the method according to any one of claims 1 to 11 are implemented.

15. An electronic device, comprising:
a storage apparatus having a computer program stored thereon; and
a processing apparatus, configured to execute the computer program in the storage apparatus to implement the method according to any one of claims 1 to 11.
